# EUROPEAN PATENT SPECIFICATION

(11) **EP 3 750 760 B1**
(45) Date of publication and mention of the grant of the patent: **06.04.2022**
(21) Application number: 19210893.4
(22) Date of filing: 22.11.2019
(51) Int. Cl.: B60S 1/34, B60S 1/18, B60S 1/08

(54) **WINDSHIELD WIPER ASSEMBLIES, WINDSHIELD WIPER SYSTEMS, AND METHODS OF CONTROLLING WIPER BLADE SWEEP IN WINDSHIELD WIPER SYSTEMS**
SCHEIBENWISCHERANORDNUNGEN, SCHEIBENWISCHERSYSTEME UND VERFAHREN ZUR WISCHERBLATTWISCHSTEUERUNG IN SCHEIBENWISCHERSYSTEMEN
ENSEMBLES D'ESSUIE-GLACE DE PARE-BRISE, SYSTÈMES D'ESSUIE-GLACE DE PARE-BRISE ET PROCÉDÉS DE COMMANDE DE BALAYAGE D'ESSUIE-GLACE DANS DES SYSTÈMES D'ESSUIE-GLACE DE PARE-BRISE

(30) Priority: 14.06.2019 IN 201911023722
(43) Date of publication of application: 16.12.2020
(73) Proprietor: ROSEMOUNT AEROSPACE INC., Burnsville, MN 55306-4898 (US)
(72) Inventor: SRINIVAS, Nouduri Phani, 560066 Kundanahalli, Bangalore (IN); SANTYAR, Srivatsa, 560066 Bengaluru, Karnataka (IN)
(74) Representative: Dehns

(56) References cited:
- US-A- 2 744 282
- US-A- 5 355 061
- US-A1- 2011 078 868

## Description

### BACKGROUND

The present disclosure is generally related to windshield wiper systems, and more particularly to controlling wiper blade sweep in windshield wiper systems.

Vehicles, such as aircraft, commonly employ windshield wipers to remove precipitation from the vehicle windshield. The windshield wipers are generally driven across the vehicle windshield by drive shaft. The drive shaft is in turn connected to a motor that, which rotates the drive shaft oscillate the windshield wiper back and forth across the vehicle windshield.

In some vehicles the motor rotates continuously in a single direction during operation. The continuous and single direction rotation is converted to oscillating rotary movement by a reversing mechanism, such as a crank-rocker mechanism, the drive motor thereby driving the windshield wiper back and forth across the windshield. The reversing mechanism restricts movement of the windshield wiper across the vehicle windshield and allows external structures to be positioned in proximity to windshield and within the rotary span of the windshield wiper. A windshield wiper assembly according to the preamble of claim 1 is described in US2011/078868.

Such systems and methods have generally been acceptable for their intended purpose. However, there remains a need for improved windshield wiper assemblies, windshield wiper systems, and methods of controlling wiper blade sweep. The present disclosure provides a solution to this need.

### BRIEF DESCRIPTION

According to one embodiment a windshield wiper assembly is provided as defined by claim 1.

In addition to one or more of the features described above, or as an alternative, further embodiments may include wherein the stop member includes a woodruff key.

In addition to one or more of the features described above, or as an alternative, further embodiments may include wherein the stop member is fixed to the output shaft by a weld or braze.

In addition to one or more of the features described above, or as an alternative, further embodiments may include wherein the keyway is circumferentially bounded by a first limit and a second limit corresponding to the predetermined sweep range, wherein the stop member is disposed between the first limit and the second limit.

In addition to one or more of the features described above, or as an alternative, further embodiments may include wherein the first limit and the second limit define therebetween a circumferential span that is substantially equivalent to the predetermined sweep range of the wiper blade.

In addition to one or more of the features described above, or as an alternative, further embodiments may include wherein the first limit and the second limit define therebetween a circumferential span greater than the predetermined sweep range of the wiper blade.

In addition to one or more of the features described above, or as an alternative, further embodiments may include wherein the faceplate defines a first fastener pattern and a second fastener pattern, the first fastener pattern is defined radially outward of the keyway, the second fastener pattern is arranged radially outward of the first fastener pattern.

In addition to one or more of the features described above, or as an alternative, further embodiments may include reduction gearbox connected to the output shaft.

In addition to one or more of the features described above, or as an alternative, further embodiments may include a brushless direct current motor coupled to the output shaft.

In addition to one or more of the features described above, or as an alternative, further embodiments may include a reversing circuit operably connected to the brushless direct current motor.

In addition to one or more of the features described above, or as an alternative, further embodiments may include a current sensor coupled to the brushless direct current electric motor for detecting current flow through the brushless direct current electric motor.

In addition to one or more of the features described above, or as an alternative, further embodiments may include a controller operably connected to the brushless direct current electric motor and configured to drive the wiper blade through the predetermined sweep range by rotating the output shaft about the rotation axis, and limit rotation of the output shaft beyond the predetermined sweep range according to current flow through the brushless direct current electric motor.

According to another embodiment an aircraft is provided. The aircraft includes an airframe supporting a windshield and a windshield wiper assembly as described above. The windshield wiper assembly is supported by the airframe, the wiper blade is slidably disposed on the windshield for movement through the predetermined sweep range, and an external structure is located on the airframe within a rotary span of the wiper blade and outside of the predetermined sweep range.

According to a further embodiment a windshield wiper system is provided. The windshield wiper system includes a windshield wiper assembly as described above and a faceplate defining a keyway, the stop member disposed within the keyway and is radially overlapped by the faceplate. A brushless direct current motor is operably connected to the output shaft of the windshield wiper assembly. A controller is operably connected to the output shaft and responsive to instructions recorded on a memory to sweep the windshield wiper within a predetermined sweep range by rotating the output shaft about the rotation axis, and limit rotation of output shaft beyond the predetermined sweep range with the stop member.

In addition to one or more of the features described above, or as an alternative, further embodiments may include a brushless direct current motor operably connected to the output shaft of the windshield wiper assembly, a reversing circuit connected to the brushless direct current motor, and a current sensor coupled to the brushless direct current motor. The instructions recorded on memory further cause the controller to receive a measurement of current flow through the brushless direct current motor, compare the current measurement to a predetermined current limit, reverse current flow through the reversing circuit when the current measurement is below the predetermined current limit, and remove current from the brushless direct current motor when the current measurement is above the predetermined current limit.

According to yet another embodiment a method of controlling sweep of a windshield wiper is provided. The method includes, at windshield wiper assembly as described above, sweeping the windshield wiper within a predetermined sweep range by rotating the output shaft about the rotation axis, and limiting rotation of output shaft beyond the predetermined sweep range with the stop member.

In addition to one or more of the features described above, or as an alternative, further embodiments may include receiving a current measurement, comparing the current measurement to a predetermined current limit, reversing current flow when the current measurement is below the predetermined current limit, and removing power when the current measurement is above the predetermined current limit.

Technical effects of the present disclosure include the capability to limit sweep within a windshield wiper system without employing a mechanical reversing mechanism. In certain embodiments overcurrent protection is also employed to remove current in the event that the wiper blade is driven outside of the wiper blade movement range. In accordance with certain embodiments the sweep angle is adjustable in software, allowing the sweep range of the wiper blade to be adjusted without changing position of the mechanical hard stops.

### BRIEF DESCRIPTION OF THE DRAWINGS

The following descriptions should not be considered limiting in any way. With reference to the accompanying drawings, like elements are numbered alike:
FIG. 1 is a perspective view of a windshield wiper assembly including a wiper blade constructed in accordance with the present disclosure, showing the wiper blade wiper assembly slidably disposed on an aircraft windshield for movement within a mechanically stopped sweep range;
FIG. 2 is a perspective view of windshield wiper assembly of FIG. 1, showing a brushless direct current motor and a reversing circuit operably connected to the windshield wiper assembly for oscillating the wiper blade back and forth within the wiper blade movement range;
FIG. 3 is a perspective view of a portion of the output shaft of the windshield wiper assembly of FIG. 1, showing a stop member fixed relative to the output and extending radially from the output shaft for mechanically stopping movement of the wiper blade outside of the wiper blade movement range;
FIG. 4 is a perspective view of a portion of a faceplate of the windshield wiper assembly of FIG. 1, showing a shaft aperture and keyway defined by the faceplate for mechanically stopping movement of the wiper blade outside of the wiper blade movement range;
FIG. 5 is a cross-sectional view of a portion of the windshield wiper assembly of FIG. 1, showing the hard stop disposed within the keyway such that the wiper blade is mechanically stopped from movement outside of the wipe blade movement range;
FIG. 6 is a schematic view of a controller of the windshield wiper system of FIG. 1, showing a current sensor coupled to the electric motor and disposed in communication with the controller for monitoring current flow through the electric motor of the windshield wiper assembly; and
FIG. 7 is a block diagram of a method of controlling sweep of a wiper blade in a windshield wiper assembly, showing operations according to an illustrative implementation of the method.

### DETAILED DESCRIPTION

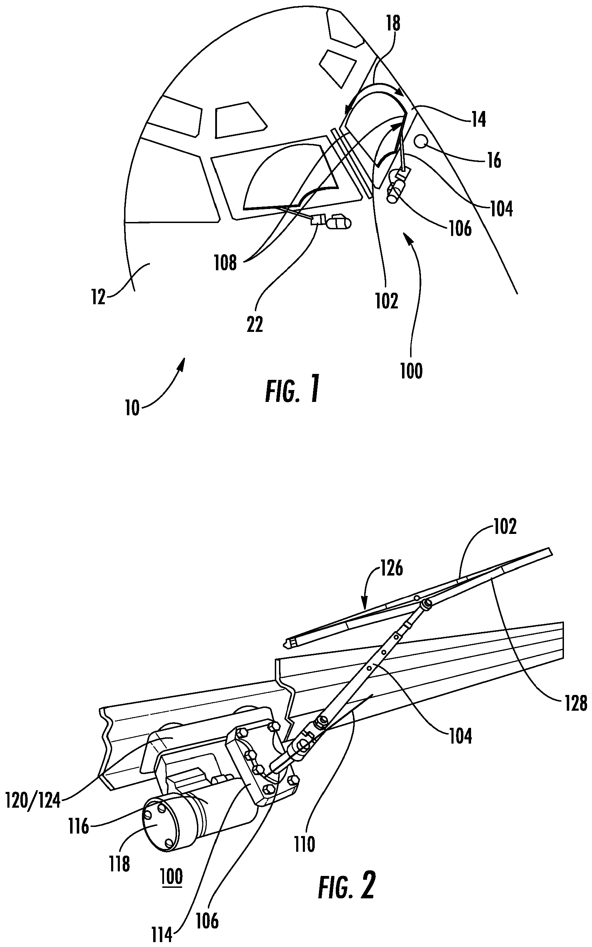

Reference will now be made to the drawings wherein like reference numerals identify similar structural features or aspects of the subject disclosure. For purposes of explanation and illustration, and not limitation, an exemplary embodiment of a windshield wiper assembly in accordance with the disclosure is shown in FIG. 1 and is designated generally by reference character 100. Other embodiments of windshield wiper assemblies, windshield wiper systems, and methods of controlling sweep of wiper blades in windshield wiper assemblies and windshield wiper systems in accordance with the present disclosure, or aspects thereof, are provided in FIGS. 2-7, as will be described. The systems and methods described herein can be used for maintaining visibility through windshields in vehicles, such as in aircraft having external structure within the rotary span of the wiper blade of the windshield wiper assembly, though the present disclosure is not limited to any particular aircraft arrangement or to aircraft in general.

Referring to FIG. 1, a vehicle, e.g., an aircraft 10, is shown. The aircraft 10 includes an airframe 12, a windshield 14, external structure 16, and the windshield wiper assembly 100. The airframe 12 supports the windshield 14. The windshield wiper assembly 100 includes a wiper blade 102, a wiper arm 104, and an output shaft 106. The wiper blade 102 is slidably disposed on the windshield 14 and is supported by the wiper arm 104 for movement through a predetermined sweep range 108. It is contemplated that the external structure 16 include a structure that can potentially be damaged in the event that the wiper blade 102 comes into contact with the external structure 16, such as a wash port or a pitot tube. Although shown and described herein in the context of an aircraft windshield wiper assembly, it is to be understood and appreciated that other types of windshield wiper assemblies can also benefit from the present disclosure, such as terrestrial and marine vehicles by way of non-limiting examples.

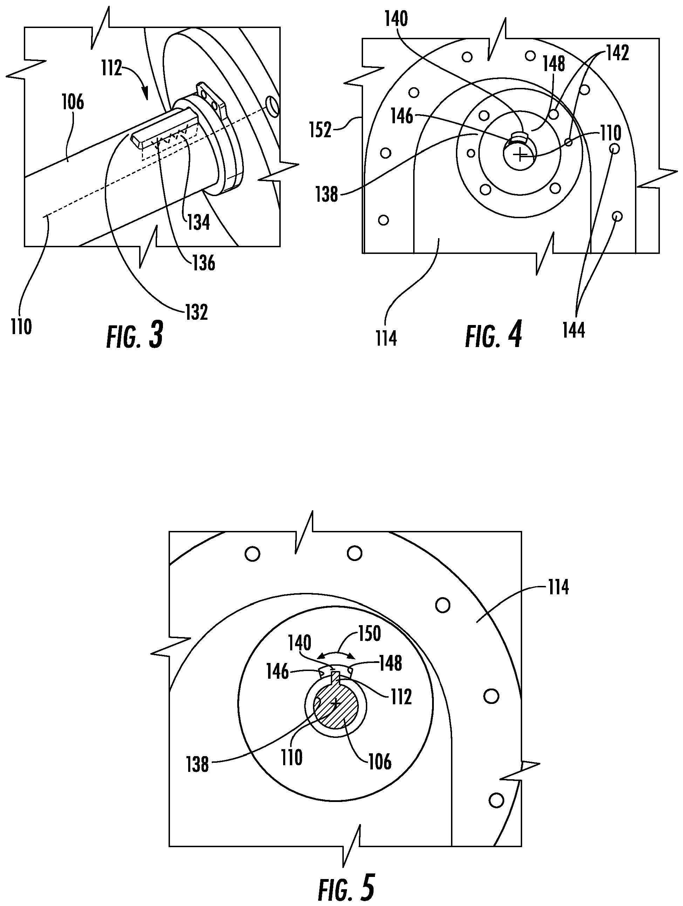

The wiper arm 104 is fixed in rotation relative to the output shaft 106 and is movable therewith about a rotation axis 110 (shown in FIG. 2) defined by the output shaft 106 within a rotary span 18. The rotary span 18 is defined circumferentially about the output shaft 106 and contain therein the external structure 16. To prevent the wiper blade 102 from striking the external structure 16 in the event that the wiper blade 102 is driven beyond the predetermined sweep range 108 the windshield wiper assembly 100 includes a stop member 112 (shown in FIG. 3), as will be described.

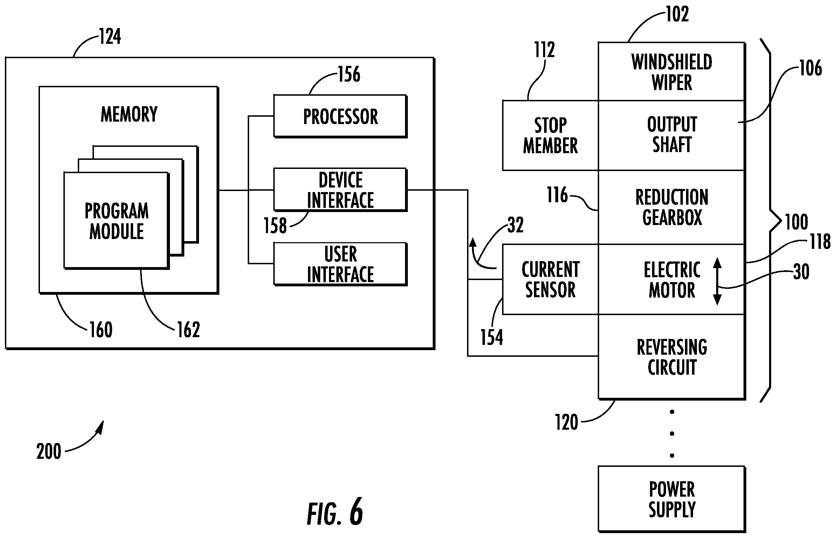

With reference to FIG. 2, the windshield wiper assembly 100 includes the wiper blade 102, the wiper arm 104, and the output shaft 106. The windshield wiper assembly 100 also includes the stop member 112 (shown in FIG. 3), a faceplate 114, and a reduction gearbox 116. The windshield wiper assembly 100 additionally includes an electric motor 118, a reversing circuit 120, a current sensor 154 (shown in FIG. 6), and a controller 124.

The wiper blade 102 is fixed in rotation relative to the output shaft 106 and includes a resilient blade body 126. The resilient blade body 126 is formed elastic material such as a rubber and is configured with a blade portion for removing precipitation from the windshield 14 (shown in FIG. 1). The wiper blade 102 is removably received within a wiper blade carrier 128. Examples of suitable resilient blade bodies include those available from Rosemount Aerospace, Incorporated of Burnsville, Minnesota.

The wiper arm 104 connects the wiper blade 102 to the output shaft 106. More specifically, the wiper arm 104 is pivotably connected to the output shaft 106 for rotation within through a sweep angle 150 (shown in FIG. 5) corresponding to the predetermined sweep range 108 (shown in FIG. 1) of the wiper blade 102. The wiper blade carrier 128 is removably fixed at an end to the wiper arm 104 by a fastener, which allows for removal of the blade carrier for service. The output shaft 106 is supported for rotation about the rotation axis 110 and extends through the faceplate 114. The wiper arm 104 is fixed to an exterior end of the output shaft 106. The reduction gearbox 116 is connected to an interior end of the output shaft 106.

With reference to FIG. 3, the output shaft 106 and the stop member 112 are shown. The output shaft 106 is supported for rotation about the rotation axis 110. The stop member 112 is fixed in rotation relative to the output shaft 106 and extends radially from the output shaft 106 to limit rotation of the output shaft 106 about the rotation axis 110, and thereby limit movement of the wiper blade 102 (shown in FIG. 1) beyond the predetermined sweep range 108. In the implementation shown in FIG. 3 the stop member 112 includes a woodruff key 132. The woodruff key 132 is fixed to the output shaft 106 by a weld or braze 136. As shown with the dashed outline in FIG. 3, the woodruff key 132 can additionally be received in a slot 134 defined within the output shaft 106. This is for illustration purposes only and is non-limiting as other types of stop members can be employed and remain within the scope of the present disclosure.

With reference to FIG. 4, the faceplate 114 is shown. The faceplate 114 defines a shaft aperture 138. The output shaft 106 (shown in FIG. 1) extends through the shaft aperture 138. The faceplate 114 also defines a keyway 140. The stop member 112 (shown in FIG. 3) is disposed within the keyway 140 and is radially overlapped by the faceplate 114. The keyway 140 is circumferentially bounded by a first limit 146 and a second limit 148. The first limit 146 and the second limit 148 correspond to the predetermined sweep range 108 (shown in FIG. 1) and the stop member 112 (shown in FIG. 3) is disposed between first limit 146 and the second limit 148. In certain embodiments the circumferential span of the sweep angle 150 defined between the first limit 146 and the second limit 148 is substantially equivalent to the predetermined sweep range 108 (shown in FIG. 1). It is also contemplated that the circumferential span of the sweep angle 150 defined between the first limit 146 and the second limit 148 can be greater than the predetermined sweep range 108.

The faceplate 114 additionally defines a first fastener pattern 142 and a second fastener pattern 144. The shaft aperture 138 extends about the rotation axis 110. The first fastener pattern 142 is defined by the faceplate 114 at a location radially outward of the keyway 140 (and the shaft aperture 138), and is configured to receive therein fasteners for fixation of the reduction gearbox 116 (shown in FIG. 2) to the faceplate 114. The second fastener pattern 144 is defined by the faceplate 114 at a location radially outward of the first fastener pattern 142, corresponds to a provisioning feature 22 (shown in FIG. 1) defined by the airframe 12, and is arranged to receive therein fasteners for fixation of the faceplate 114 to the airframe 12.

The keyway 140 bounds the shaft aperture 138, is defined radially outward from the shaft aperture 138, and is in turn bounded by a first limit 146 and a second limit 148. The first limit 146 is circumferentially offset from the second limit 148 about the rotation axis 110 such that the first limit 146 and the second limit 148 define therebetween the sweep angle 150 (shown in FIG. 5). In certain embodiments the circumferential span of the sweep angle 150 is substantially equivalent to the predetermined sweep range 108 (shown in FIG. 1) of the wiper blade 102 (shown in FIG. 1). In accordance with certain embodiments, the sweep angle 150 can be greater than the predetermined sweep range 108, which allows the windshield wiper assembly 100 to be customized for applications having different sweep angles. In the embodiment shown in FIG. 4 the faceplate 114 has a shield portion 152. The shield portion 152 axially overlaps the stop member 112 (shown in FIG. 3) along the rotation axis 110. As will be appreciated by those of skill in the art in view of the present disclosure, this limits the infiltration of precipitation and/or foreign material through the faceplate 114, and therethrough into the airframe 12 (shown in FIG. 1).

With reference to FIG. 5, the output shaft 106 and the faceplate 114 are shown. The output shaft 106 is supported for rotation about the rotation axis 110 and is arranged within the shaft aperture 138. The stop member 112 is fixed in rotation relative to the output shaft 106, extends radially from the output shaft 106, and is disposed within the keyway 140. More specifically, the stop member 112 is disposed between the first limit 146 and the second limit 148 bounding the keyway 140 such that the stop member 112 is captive therein. This prevents the output shaft 106 from rotating outside of the sweep angle 150, and thereby arresting the wiper blade 102 (shown in FIG. 1) in the event that wiper blade 102 is driven beyond the predetermined sweep range 108 (shown in FIG. 1).

With continuing reference to FIG. 2, the reduction gearbox 116 is connected to the output shaft 106. More specifically, the reduction gearbox 116 connects the output shaft 106 to the electric motor 118 through a gear train housed within the reduction gearbox. The gear train is arranged to reduce speed of mechanical rotation received from the electric motor 118 to a rotational speed suitable for movement of the wiper blade 102 across the windshield 14 (shown in FIG. 1). The gear train also increases the torque applied by the electric motor 118 to the output shaft 106. As will be appreciated by those of skill in the art in view of the present disclosure, the reduction gearbox 116 reduces the torque otherwise required from the electric motor 118, there limiting size of the electric motor 118

The electric motor 118 is coupled to the output shaft 106. More specifically, the electric motor 118 is coupled to the wiper blade 102 through the reduction gearbox 116 and the output shaft 106 for sweeping the wiper blade 102 across the windshield 14 (shown in FIG. 1) using mechanical rotation communicated by the electric motor 118 to the output shaft 106 through the reduction gearbox 116. As shown in FIG. 2 the electric motor 118 is a brushless direct current electric motor. Employment of a brushless direct current electric motor allows the electric motor 118 improves the reliability of the windshield wiper assembly 100 as there is no need to replace brushes or remove debris generated from frictional engagement of brushes with rotating structure within the electric motor 118.

The reversing circuit 120 is operably connected to the electric motor 118. More specifically, the reversing circuit 120 is electrically connected to the electric motor 118 and is configured for reversing rotary direction of the electric motor 118, and thereby the output shaft 106, for sweeping the wiper blade 102 across the windshield 14 (shown in FIG. 1). As will be appreciated by those of skill in the art in view of the present disclosure, reversing the direction of rotation of the electric motor 118 eliminates the need reverse the rotational direction of the output shaft 106 mechanically, e.g., using a crank-rocker mechanism, simplifying the arrangement of the windshield wiper assembly 100. Further, the reversing circuit 120 also allows the predetermined sweep range 108 (shown in FIG. 1) to be defined in software, e.g., using the controller 124 (shown in FIG. 6), rather than hardware, simplifying the integration of the windshield wiper assembly 100 into different types of vehicles, e.g., aircraft having windshields with differently-sized viewing regions.

With reference to FIG. 6, a windshield wiper system 200 is shown. The windshield wiper system 200 includes the windshield wiper assembly 100, the controller 124, and a current sensor 154. The current sensor 154 is coupled to the electric motor 118, e.g., the brushless direct current electric motor, and is configured for detecting a current flow 30 through the electric motor 118. As shown with the current measurement 32, the current sensor 154 is configured to report the current flow 30 through the electric motor 118 via the current measurement 32. The controller 124 is operably connected to the electric motor 118, e.g., through the reversing circuit 120, and is configured to drive the wiper blade 102 through the predetermined sweep range 108 (shown in FIG. 1) by rotating the output shaft 106 about the rotation axis 110 (shown in FIG. 2). The controller is also configured to limit rotation of the output shaft 106 beyond the predetermined sweep range 108 according to the current flow 30 through the electric motor 118.

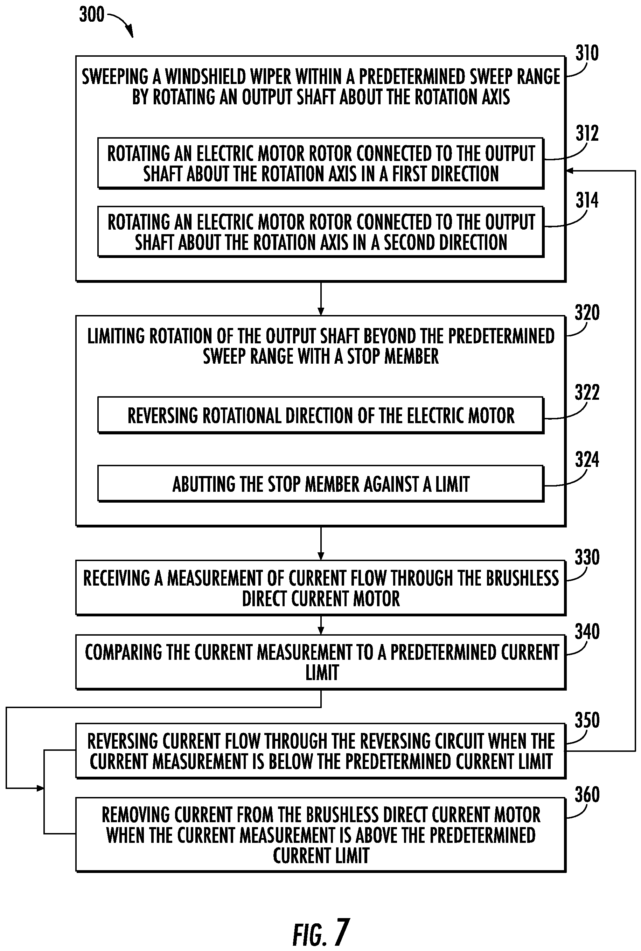

In the illustrated implementation the controller 124 includes a processor 156, a device interface 158, and a memory 160. The device interface 158 is connected to the current sensor 154 and the reversing circuit 120. The processor 156 is disposed in communication with the current sensor 154 and the reversing circuit 120 through the device interface 158, and is additionally disposed in communication with the memory 160. The memory 160 includes a non-transitory machine-readable medium having a plurality of program modules recorded thereon containing instructions that, when read by the processor 156, cause the processor to execute certain operations. Among the operations are operations of a method 300 (shown in FIG. 7) of controlling sweep of wiper blade, e.g., the wiper blade 102, across an aircraft windshield, e.g., the windshield 14 (shown in FIG. 1). It is contemplated that the controller 124 be implemented with software, circuitry, or a combination of circuitry and software.

With reference to FIG. 7, the method 300 is shown. As shown with box 310, the method 300 includes sweeping a wiper blade, e.g., the wiper blade 102 (shown in FIG. 1) through a predetermined sweep range, e.g., the predetermined sweep range 108 (shown in FIG. 1). It is contemplated that the wiper blade be swept through the predetermined sweep range by rotating an output shaft about a rotation axis, e.g., the rotation axis 110, as also shown with box 310. As shown with box 312, the output shaft is rotated by rotating an electric motor, e.g., the electric motor 118 (shown in in FIG. 2) in about the rotation axis in a first direction, and thereafter in a second direction about the rotation axis opposite the first direction, as shown with box 314.

The method 300 also includes limiting rotation of the output shaft beyond the predetermined range with a stop member, e.g., the stop member 112. For example, as shown with box 322, the rotational direction of the electric motor can be reversed. Alternatively (or additionally), the stop member can be brought into abutment with a limit, e.g., the first limit 146 (shown in FIG. 4) or the second limit 148 (shown in FIG. 4), as shown with box 324.

The method 300 additionally includes receiving a measurement of current flow through a brushless direct current electric motor, e.g., the current flow 30 (shown in FIG. 6), as shown with box 330. The current measurement is compared with a predetermined current limit, as shown with box 340. When the current measurement is below the predetermined current limit the current flow is reversed through a reversing circuit, e.g., the reversing circuit 120 (shown in FIG. 2), as shown with box 350, and the wiper blade swept back and forth across the windshield using oscillatory rotary motion of the output shaft, as shown by arrow 352. When the current measurement is above the predetermined current limit power can be removed from the brushless direct current electric motor, as shown with box 360.

Windshield wiper systems are commonly used in aircrafts and helicopters to clear the aircraft windshield of rain and other foreign material. Typically, the windshield wiper system employs a crank-rocker mechanism wherein continuous rotation of an electric motor is converted into oscillatory motion at an output shaft. In such systems the sweep angle of the wiper blade associated with the oscillatory motion of the output shaft is fixed mechanically by the crank-rocker mechanism, the sweep angle of wiper blade constrained within the intended sweep angle.

In embodiments described herein windshield wiper systems employ a reversing electric motor. In this respect the electronic control is employed to reverse the electric motor to oscillate rotation of the output shaft as communicated through a reduction gearbox. This has the advantage of allowing the sweep of the wiper blade to be controlled using the electronic control. It also potentially allows the wiper blade to oversweep the windshield, the wiper blade potentially coming into contact with external structures located in proximity to the windshield. To prevent oversweep embodiments described herein include a mechanical hard stop formed by cooperation of a stop member and a key way.

According to the invention, the output shaft carries a stop member, e.g., a key, and a keyway, e.g., an angular cutout, is defined within the faceplate of the windshield wiper assembly. The stop member is disposed with the keyway and the angular span of the keyway is defined to accommodate the sweep of the intended application of the windshield wiper assembly. During normal operation, i.e., when the reversal timing of the electronic motor control is as intended, the stop member rotates freely within the keyway and the wipe blade oscillates within the predetermined sweep range across the windshield. In the event of an oversweep the key comes into abutment with limits bounding the keyway, hard-stopping rotary movement of the output shaft. In further embodiments current flow through the electric motor is monitored, excessive current draw associated with the electric motor driving the stop member into abutment with a keyway limit shutting down the windshield wiper system. This prevents damage to the windshield wiper system in the event of oversweep as well as prevent damage to external structures in proximity to the wiper blade that could otherwise be overswept by the wiper blade.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims.

## Claims

1. A windshield wiper assembly, comprising:
a wiper blade (102);
an output shaft (106) supported for rotation about a rotation axis (110), wherein the wiper blade is fixed in rotation relative to the output shaft; and
a stop member (112) fixed in rotation relative to the output shaft and extending radially from the output shaft to limit rotation of the output shaft about the rotation axis, the stop member thereby limiting movement of the wiper blade beyond a predetermined sweep range (108) of the wiper blade, **characterized in that** the windshield wiper assembly further comprises a faceplate (114) defining a keyway (140), wherein the stop member is disposed within the keyway and is radially overlapped by the faceplate and **in that** the faceplate defines a shaft aperture (138), wherein the keyway bounds the shaft aperture and is defined within the faceplate radially outward of the shaft aperture and/or wherein the faceplate has a shield portion, wherein the shield portion axially overlaps the stop member along the rotation axis.

2. The windshield wiper assembly of claim 1, wherein the stop member includes a woodruff key (132) and/or wherein the stop member is fixed to the output shaft by a weld or braze (136).

3. The windshield wiper assembly of claim 1 or 2, wherein the keyway is circumferentially bounded by a first limit (146) and a second limit (148) corresponding to the predetermined sweep range (108), wherein the stop member is disposed between the first limit and the second limit.

4. The windshield wiper assembly of claim 3, wherein the first limit and the second limit define therebetween a circumferential span that is substantially equivalent to the predetermined sweep range of the wiper blade or wherein the first limit and the second limit define therebetween a circumferential span greater than the predetermined sweep range of the wiper blade.

5. The windshield wiper assembly of any preceding claim, wherein the faceplate defines a first fastener pattern (142) and a second fastener pattern (144), the first fastener pattern is defined radially outward of the keyway, the second fastener pattern is arranged radially outward of the first fastener pattern.

6. The windshield wiper assembly of any preceding claim, further comprising a reduction gearbox (116) connected to the output shaft.

7. The windshield wiper assembly of any preceding claim, further comprising a brushless direct current motor coupled to the output shaft, and preferably further comprising a reversing circuit operably connected to the brushless direct current motor, and preferably further comprising a current sensor coupled to the brushless direct current electric motor for detecting current flow through the brushless direct current electric motor.

8. The windshield wiper assembly of claim 7, further comprising a controller (124) operably connected to the brushless direct current electric motor and configured to:
drive the wiper blade through the predetermined sweep range by rotating the output shaft about the rotation axis, and
limit rotation of the output shaft beyond the predetermined sweep range according to current flow through the brushless direct current electric motor.

9. An aircraft, comprising:
an airframe (12) supporting a windshield (14);
a windshield wiper assembly (100) of any preceding claim supported by the airframe, wherein the wiper blade (102) is slidably disposed on the windshield for movement through the predetermined sweep range (108); and
an external structure (16) located on the airframe within a rotary span (18) of the wiper blade and outside of the predetermined sweep range.

10. A windshield wiper system, comprising:
a windshield wiper assembly (100) of claim 7, the controller (124) operably connected to the output shaft and responsive to instructions recorded on a memory to:
sweep the windshield wiper within a predetermined sweep range by rotating the output shaft about the rotation axis; and
limit rotation of output shaft beyond the predetermined sweep range with the stop member.

11. The windshield wiper system of claim 10, further comprising:
a brushless direct current motor (118) operably connected to the output shaft of the windshield wiper assembly;
a reversing circuit (120) connected to the brushless direct current motor; and
a current sensor (154) coupled to the brushless direct current motor;
wherein the instructions further cause the controller to:
receive a measurement of current flow through the brushless direct current motor;
compare the current measurement to a predetermined current limit;
reverse current flow through the reversing circuit when the current measurement is below the predetermined current limit; and
remove current from the brushless direct current motor when the current measurement is above the predetermined current limit.

12. A method of controlling sweep of a windshield wiper, comprising:
at a windshield wiper assembly according to any of claims 1 to 8:
sweeping the windshield wiper within a predetermined sweep range by rotating the output shaft about the rotation axis; and
limiting rotation of output shaft beyond the predetermined sweep range with the stop member.

13. The method of claim 12, further comprising:
receiving a current measurement;
comparing the current measurement to a predetermined current limit;
reversing current flow when the current measurement is below the predetermined current limit; and
removing power when the current measurement is above the predetermined current limit.

## Patentansprüche

1. Windschutzscheibenwischerbaugruppe, umfassend:
ein Wischerblatt (102);
eine Abtriebswelle (106), die zur Rotation um eine Rotationsachse (110) gelagert ist, wobei das Wischerblatt relativ zur Abtriebswelle in der Rotation feststehend ist; und
ein Anschlagselement (112), das relativ zur Abtriebswelle in der Rotation feststehend ist und sich radial von der Abtriebswelle aus erstreckt, um eine Rotation der Abtriebswelle um die Rotationsachse zu beschränken, wodurch das Anschlagselement eine Bewegung des Wischerblatts über einen vorbestimmten Überstreichbereich (108) des Wischerblatts hinaus beschränkt, **dadurch gekennzeichnet, dass** die Windschutzscheibenwischerbaugruppe ferner eine Stirnplatte (114) umfasst, die eine Keilnut (140) definiert, wobei das Anschlagselement innerhalb der Keilnut angeordnet ist und radial von der Stirnplatte überlappt ist, und dadurch, dass die Stirnplatte eine Wellenöffnung (138) definiert, wobei die Keilnut die Wellenöffnung begrenzt und innerhalb der Stirnplatte radial auswärts der Wellenöffnung definiert ist, und/oder wobei die Stirnplatte einen Abschirmabschnitt aufweist, wobei der Abschirmabschnitt axial das Anschlagselement entlang der Rotationsachse überlappt.

2. Windschutzscheibenwischerbaugruppe nach Anspruch 1, wobei das Anschlagselement eine Scheibenfeder (132) beinhaltet und/oder wobei das Anschlagselement an der Abtriebswelle durch eine Schweißstelle oder Hartlötstelle (136) befestigt ist.

3. Windschutzscheibenwischerbaugruppe nach Anspruch 1 oder 2, wobei die Keilnut in Umfangsrichtung durch eine erste Begrenzung (146) und eine zweite Begrenzung (148) entsprechend dem vorbestimmten Überstreichbereich (108) begrenzt ist, wobei das Anschlagselement zwischen der ersten Begrenzung und der zweiten Begrenzung angeordnet ist.

4. Windschutzscheibenwischerbaugruppe nach Anspruch 3, wobei die erste Begrenzung und die zweite Begrenzung dazwischen eine Umfangsspanne definieren, die im Wesentlichen mit dem vorbestimmten Überstreichbereich des Wischerblatts identisch ist, oder wobei die erste Begrenzung und die zweite Begrenzung dazwischen eine Umfangsspanne definieren, die größer als der vorbestimmte Überstreichbereich des Wischerblatts ist.

5. Windschutzscheibenwischerbaugruppe nach einem der vorstehenden Ansprüche, wobei die Stirnplatte ein erstes Befestigungsmittelmuster (142) und ein zweites Befestigungsmittelmuster (144) definiert, wobei das erste Befestigungsmittelmuster radial auswärts der Keilnut definiert ist, wobei das zweite Befestigungsmittelmuster radial auswärts des ersten Befestigungsmittelmusters angeordnet ist.

6. Windschutzscheibenwischerbaugruppe nach einem der vorstehenden Ansprüche, ferner ein Untersetzungsgetriebe (116) umfassend, das mit der Abtriebswelle verbunden ist.

7. Windschutzscheibenwischerbaugruppe nach einem der vorstehenden Ansprüche, ferner einen bürstenlosen Gleichstrommotor umfassend, der mit der Abtriebswelle gekoppelt ist, und bevorzugt ferner eine Umkehrschaltung umfassend, die wirksam mit dem bürstenlosen Gleichstrommotor verbunden ist, und bevorzugt ferner einen Stromsensor, der mit dem bürstenlosen Gleichstromelektromotor verbunden ist, zum Erkennen eines Stromflusses durch den bürstenlosen Gleichstromelektromotor umfassend.

8. Windschutzscheibenwischerbaugruppe nach Anspruch 7, ferner eine Steuerung (124) umfassend, die wirksam mit dem bürstenlosen Gleichstromelektromotor verbunden ist und so konfiguriert ist, dass:
sie das Wischerblatt über den vorbestimmten Überstreichbereich durch Rotation der Abtriebswelle um die Rotationsachse antreibt, und
die Rotation der Abtriebswelle über den vorbestimmten Überstreichbereich hinaus gemäß dem Stromfluss durch den bürstenlosen Gleichstromelektromotor begrenzt.

9. Luftfahrzeug, umfassend:
ein Flugwerk (12), das eine Windschutzscheibe (14) stützt;
eine Windschutzscheibenwischerbaugruppe (100) nach einem der vorstehenden Ansprüche, die von dem Flugwerk gestützt wird, wobei das Wischerblatt (102) gleitend an der Windschutzscheibe zur Bewegung über den vorbestimmten Überstreichbereich (108) angeordnet ist; und
eine externe Struktur (16), die an dem Flugwerk innerhalb einer Drehspanne (18) des Wischerblatts und außerhalb des vorbestimmten Überstreichbereichs angeordnet ist.

10. Windschutzscheibenwischersystem, umfassend:
eine Windschutzscheibenwischerbaugruppe (100) nach Anspruch 7, wobei die Steuerung (124) wirksam mit der Abtriebswelle verbunden ist und auf Anweisungen reagiert, die in einem Speicher niedergelegt sind, um:
den Windschutzscheibenwischer innerhalb eines vorbestimmten Überstreichbereichs durch Rotation der Abtriebswelle um die Rotationsachse überstreichen zu lassen; und
die Rotation der Abtriebswelle über den vorbestimmten Überstreichbereich mit dem Anschlagselement zu begrenzen.

11. Windschutzscheibenwischersystem nach Anspruch 10, ferner Folgendes umfassend:
einen bürstenlosen Gleichstrommotor (118), der wirksam mit der Abtriebswelle der Windschutzscheibenwischerbaugruppe verbunden ist;
eine Umkehrschaltung (120), die mit dem bürstenlosen Gleichstrommotor verbunden ist; und
einen Stromsensor (154), der mit dem bürstenlosen Gleichstrommotor verbunden ist;
wobei die Anweisungen ferner bewirken, dass die Steuerung:
eine Messung eines Stromflusses durch den bürstenlosen Gleichstrommotor empfängt;
die Strommessung mit einer vorbestimmten Stromgrenze vergleicht;
den Stromfluss durch die Umkehrschaltung umkehrt, wenn die Strommessung unter der vorbestimmten Stromgrenze liegt; und
Strom von dem bürstenlosen Gleichstrommotor entfernt, wenn die Strommessung über der vorbestimmten Stromgrenze liegt.

12. Verfahren zum Steuern des Überstreichens eines Windschutzscheibenwischers, umfassend:
an einer Windschutzscheibenwischerbaugruppe nach einem der Ansprüche 1 bis 8:
Überstreichenlassen des Windschutzscheibenwischers innerhalb eines vorbestimmten Überstreichbereichs durch Rotation der Abtriebswelle um die Rotationsachse; und
Begrenzen der Rotation der Abtriebswelle über den vorbestimmten Überstreichbereich mit dem Anschlagselement.

13. Verfahren nach Anspruch 12, ferner Folgendes umfassend:
Empfangen einer Strommessung;
Vergleichen der Strommessung mit einer vorbestimmten Stromgrenze;
Umkehren des Stromflusses, wenn die Strommessung unter der vorbestimmten Stromgrenze liegt; und
Entfernen von Leistung, wenn die Strommessung über der vorbestimmten Stromgrenze liegt.

## Revendications

1. Ensemble d'essuie-glace de pare-brise comprenant :
un balai d'essuie-glace (102) ;
un arbre de sortie (106) soutenu pour la rotation autour d'un axe de rotation (110), dans lequel le balai d'essuie-glace est fixé en rotation par rapport à l'arbre de sortie ; et
un élément d'arrêt (112) fixé en rotation par rapport à l'arbre de sortie et s'étendant radialement de l'arbre de sortie pour limiter la rotation de l'arbre de sortie autour de l'axe de rotation, l'élément d'arrêt limitant ainsi le mouvement du balai d'essuie-glace au-delà d'une plage de balayage prédéterminée (108) du balai d'essuie-glace, **caractérisé en ce que** l'ensemble d'essuie-glace comprend en outre une plaque frontale (114) définissant une rainure de clavette (140), dans lequel l'élément d'arrêt est disposé dans la rainure de clavette et est chevauché radialement par la plaque frontale
et **en ce que**, la plaque frontale définit une ouverture d'arbre (138), dans lequel la rainure de clavette limite l'ouverture de l'arbre et est définie à l'intérieur de la plaque frontale radialement vers l'extérieur de l'ouverture de l'arbre et/ou dans lequel la plaque frontale possède une partie blindée, dans lequel la partie blindée chevauche axialement l'élément d'arrêt le long de l'axe de rotation.

2. Ensemble d'essuie-glace de pare-brise selon la revendication 1, dans lequel l'élément d'arrêt comprend une clavette demi-lune (132) et/ou
dans lequel l'élément d'arrêt est fixé à l'arbre de sortie par une soudure ou un brasage (136).

3. Ensemble d'essuie-glace de pare-brise selon la revendication 1 ou 2, dans lequel la rainure de clavette est limitée circonférentiellement par une première limite (146) et une seconde limite (148) correspondant à la plage de balayage prédéterminée (108), dans lequel l'élément d'arrêt est disposé entre la première limite et la seconde limite.

4. Ensemble d'essuie-glace de pare-brise selon la revendication 3, dans lequel la première limite et la seconde limite définissent entre elles une portée circonférentielle sensiblement équivalente à la plage de balayage prédéterminée du balai d'essuie-glace ou dans lequel la première limite et la seconde limite définissent entre elles une portée circonférentielle supérieure à la plage de balayage prédéterminée du balai d'essuie-glace.

5. Ensemble d'essuie-glace selon une quelconque revendication précédente, dans lequel la plaque frontale définit un premier modèle de fixation (142) et un second modèle de fixation (144), le premier modèle de fixation est défini radialement vers l'extérieur de la rainure de clavette, le second modèle de fixation est disposé radialement vers l'extérieur du premier modèle de fixation.

6. Ensemble d'essuie-glace selon une quelconque revendication précédente, comprenant en outre un boîtier de réduction (116) relié à l'arbre de sortie.

7. Ensemble d'essuie-glace selon une quelconque revendication précédente, comprenant en outre un moteur à courant continu sans balais couplé à l'arbre de sortie, et de préférence comprenant en outre un circuit d'inversion connecté de manière opérationnelle au moteur à courant continu sans balais, et comprenant de préférence en outre un capteur de courant couplé au moteur électrique à courant continu sans balais pour détecter le débit de courant traversant le moteur électrique à courant continu sans balais.

8. Ensemble d'essuie-glace selon la revendication 7, comprenant en outre un dispositif de commande (124) connecté de manière opérationnelle au moteur électrique à courant continu sans balais et configuré pour :
faire passer le balai d'essuie-glace dans la plage de balayage prédéterminée en faisant tourner l'arbre de sortie autour de l'axe de rotation, et
limiter la rotation de l'arbre de sortie au-delà de la plage de balayage prédéterminée en fonction du débit de courant traversant le moteur électrique à courant continu sans balais.

9. Aéronef, comprenant :
une cellule (12) supportant un pare-brise (14) ;
un ensemble d'essuie-glace de pare-brise (100) selon une quelconque revendication précédente soutenue par la cellule, dans lequel le balai d'essuie-glace (102) est disposé coulissant sur le pare-brise pour se déplacer dans la plage de balayage prédéterminée (108); et
une structure externe (16) située sur la cellule à l'intérieur d'une envergure de rotation (18) du balai d'essuie-glace et à l'extérieur de la plage de balayage prédéterminée.

10. Système d'essuie-glace de pare-brise, comprenant :
un ensemble d'essuie-glace de pare-brise (100) selon la revendication 7, le dispositif de commande (124) étant connecté de manière opérationnelle à l'arbre de sortie et répondant aux instructions enregistrées sur une mémoire pour :
balayer l'essuie-glace de pare-brise dans une plage de balayage prédéterminée en faisant tourner l'arbre de sortie autour de l'axe de rotation ; et
limiter la rotation de l'arbre de sortie au-delà de la plage de balayage prédéterminée avec l'élément d'arrêt.

11. Système d'essuie-glace de pare-brise selon la revendication 10, comprenant en outre :
un moteur à courant continu sans balais (118) connecté de manière opérationnelle à l'arbre de sortie de l'ensemble d'essuie-glace de pare-brise ;
un circuit d'inversion (120) connecté au moteur à courant continu sans balais ; et
un capteur de courant (154) couplé au moteur à courant continu sans balais ;
dans lequel les instructions amènent en outre le dispositif de commande à :
recevoir une mesure de débit de courant traversant le moteur à courant continu sans balais ;
comparer la mesure de courant à une limite de courant prédéterminée ;
inverser le débit de courant traversant le circuit d'inversion lorsque la mesure de courant est inférieure à la limite de courant prédéterminée ; et
couper le courant du moteur à courant continu sans balais lorsque la mesure de courant est supérieure à la limite de courant prédéterminée.

12. Procédé de commande du balayage d'un essuie-glace de pare-brise, comprenant :
au niveau d'un ensemble d'essuie-glace de pare-brise selon l'une quelconque des revendications 1 à 8 :
le balayage de l'essuie-glace de pare-brise dans une plage de balayage prédéterminée en faisant tourner l'arbre de sortie autour de l'axe de rotation ; et
la limite de la rotation de l'arbre de sortie au-delà de la plage de balayage prédéterminée avec l'élément d'arrêt.

13. Procédé selon la revendication 12, comprenant en outre :
la réception d'une mesure de courant ;
la comparaison de la mesure de courant à une limite de courant prédéterminée ;
l'inversion du débit de courant lorsque la mesure de courant est inférieure à la limite de courant prédéterminée ; et
la coupure de l'alimentation lorsque la mesure de courant est supérieure à la limite de courant prédéterminée.
